# EUROPEAN PATENT APPLICATION

(11) **EP 2 898 965 A1**
(43) Date of publication of application: **29.07.2015**
(21) Application number: 14171486.5
(22) Date of filing: 06.06.2014
(51) Int. Cl.: B21K 1/30

(54) **Method of manufacturing gear with double teeth patterns involving forging and two stage cold extrusion process**

(30) Priority: 24.01.2014 IN DE02192014
(71) Applicant: Shivam Autotech Ltd., 110017 New Delhi (IN)
(72) Inventor: Munjal, Neeraj, 110017 New Delhi (IN)
(74) Representative: Manitz, Finsterwald & Partner GbR

(57) **Abstract**

The present invention is relating to the method of manufacturing gear with double teeth patterns (13) involving forging and two stage cold extrusion process, a component to be applied in power transmission systems, and more particularly to be used in motor cycles; wherein the whole structural features of said gear, along with its double teeth pattern therein, is achieved during the forging and cold extrusion processes followed by various sub processes.

## Description

### Field of the Invention:

Present invention is related to a new and advanced method of manufacturing a gear with double teeth patterns which mainly involves forging operation towards gear blank formation, followed by two stage cold extrusion operations towards forming teeth pattern on the outer circumferential surface of the small gear section as well as on the outer circumferential surface of the bigger gear section therein. The proposed manufacturing method herein also involves certain strategic secondary operations like annealing, shot blasting, phosphating, CNC machining, honing/hard part boring etc. at different strategic stages therein. Unlike the conventional practice, the proposed method do not include teeth shaping and hobbing operations towards creation of the proposed gear with double teeth patterns and achieve both the teeth patterns on the outer circumferential surfaces of small gear section and bigger gear section therein.

### Background of the present invention:

Conventionally most of the gears with teeth patters, including the ratchet gears comprise a series of gear teeth, created as a specific pattern of teeth dimensions, and such teeth pattern is usually created as a circular surface or face/ circumference of the gear. The section of the ratchet that interacts with another gear or any other power transmission mean, normally the pawl, will slide over said rounded side, but will get caught on the flat side.

In one conventional practice, after casting of the main body of the said gear, it is subjected to substantial machining to create all the structural features, hole piercing for shaft assembly, teeth pattern cutting , hobbing and shaping etc.

Such practice involves substantial resources, creates huge wastage and is time consuming. It doesn't provide desired structural strength in the final product, mainly responsible for its reduced functional life. In conventional practice the layer or pattern of teeth is formed on the gear by involving teeth hobbing and/or teeth shaping. Due to such methodology, the production of gears is associated with the low abrasion resistance, lack of perfection leading to less probability of customized installation in the power transmission systems, more prone to noise during functioning, very sensitive to accidental damage and limited in usage in automobiles.

Further, in an alternate practice of gear making, particularly ratchet gear manufacturing, the piece of raw material, cut in suitable size, is mainly subjected to partial forging or extrusion, followed by substantial machining operations on to a basic plane ingot or alternatively a basic piece of ingot obtained is directly subjected to a series of machining operations, namely surface profile creation by machining/cutting; hole piercing; ingot's surface profile cutting/refining and strengthening; teeth pattern cutting etc. Most importantly, all such practices involve substantial machining towards structural features development on the ingot and for creation of the series of its teeth pattern. Teeth cutting are usually done by one-by-one teeth cutting or hobbing of teeth therein. Further this method is so time consuming that it is insufficient in fulfilling the requirements/demands of the concerned auto industry.

Application of single step forging process for the production of Gear blank for making the said gear with double teeth is not conventionally being practiced, mainly due to following reasons:
(i) Technical complications in die designing for commercial production of the said component;
(ii) Non-achievement of ideal forging conditions for producing commercially acceptable gear with teeth;
(iii) Involvement of so many dimensional aspects of the said auto component of various size range, namely the central hole creation, size optimization of the said component, teeth formation etc., which are difficult to consider in one single standardized process, mainly towards achieving all required and preferred structural and functional features of the said auto component.

Therefore, the present invention is mainly intended to propose a manufacturing method, which mainly involves hot or cold forging towards creating the gear blank from the initial piece of ingot, followed by performing cold gear extrusion in two steps on duly annealed and conditioned said forged work piece towards creating two teeth patterns on the outer circumferential surfaces of small gear section and bigger gear section of the proposed gear with double teeth patterns. The most important object of the invention is to obviate the application of machining operations, like teeth shaping and hobbing towards creation of the proposed gear with double teeth patterns and in a very unusual and innovative manner achieving both the teeth patterns on the outer circumferential surfaces of small gear section and bigger gear section therein by stepwise cold extrusion operations.

The invention is intended to propose a manufacturing method, which also includes certain supporting secondary steps as strategic steps in the whole manufacturing process, apart from performing the essential operations of cold/hot forging and thereafter two step cold extrusion; mainly towards supporting the performance of said essential steps in effective and perfect manner and towards finalization of said gear formation. Such secondary steps includes mainly annealing, shot blasting, phosphating, CNC machining (very limited), case carburizing, shot blasting (hanger type), and honing (hard part boring) etc.

The ratchet gear, particularly with the double teeth patterns on the outer circumferential surfaces of its small and the bigger gear sections, being manufactured by the present proposed method is much advanced in its structural and functional properties in comparison to the similar conventional auto components prepared through conventional processes, namely in terms of very high stress bearing capacity, corrosion resistance, high temperature tolerance and very high structural strength etc.

### Object of the present invention

The main object of the present invention is to propose a method of manufacturing a gear with double teeth patterns which mainly involves forging operation towards gear blank formation, followed by two stage cold extrusion operations towards forming teeth pattern on the outer circumferential surfaces of the small gear section as well as on the outer circumference of the bigger gear section therein.

Another object of the present invention is to propose a method of manufacturing a ratchet gear, particularly with the double teeth patterns on the outer circumferential surfaces of its small and the bigger gear sections thereof, wherein major structural features of the said gear and its teeth pattern are formed during cold extrusion operation and thereafter certain optional supportive machining processes are required for surface refining, product strengthening and finalizing the ratchet gear production.

Another object of the present invention is to propose a method of manufacturing a gear with double teeth patterns, which mainly involves hot or cold forging towards creating the gear blank from the initial piece of ingot, followed by performing cold gear extrusion in two steps on duly annealed and conditioned said forged work piece towards creating two teeth patterns on the outer circumferential surfaces of small gear section and bigger gear section thereof.

Another object of the present invention is to propose a method of manufacturing a gear with double teeth patterns, wherein it is characterized by obviating the application of machining operations like teeth shaping and hobbing towards creation of the proposed gear with double teeth patterns and in a very unusual and innovative manner achieving both the teeth patterns on the outer circumferential surfaces of small gear section and bigger gear section therein by stepwise cold extrusion operations.

Another objective of the present invention is to propose a novel method for manufacturing the ratchet gear, particularly with the double teeth patterns on the outer circumferential surfaces of its small and the bigger gear sections thereof, wherein the said method of manufacturing is characterized by performing the cold extrusion followed by Phosphating and CNC wherein the teeth pattern of the said ratchet gear on both layers are extruded during the formation of whole ratchet gear body, without performing any teeth cutting/shaping or hobbing operation.

Another objective of the present invention is to propose a method of manufacturing a ratchet gear, particularly with the double teeth patterns on the outer circumferences of its small and the bigger gear sections thereof, wherein said gear with double teeth pattern is characterized by its advanced properties in comparison to conventional such gears and the teeth pattern therein, mainly in terms of structural strength, stress tolerance, abrasive strength towards proper performance in high temperature environments and continuous performing in critical conditions without fatigue etc., primarily due to creation of complete component including the teeth pattern therein in cold extrusion.

Yet another objective of the present invention is to propose new set of closed die designed for performing said cold or hot forging to create the gear blank and further two set of dies to perform said cold extrusion operations in two steps on the said forged gear blank towards creating teeth patterns on the outer circumferential surfaces of its small and the bigger gear sections thereof; wherein such dies are made in the state-of-the-art manner in variable optional range of shape, size, dimension, surface pattern and configuration for the said purpose.

### Description of the present invention:

The invention herein discloses a method of manufacturing gear with double teeth patterns by involves forging operation towards gear blank formation, followed by two stage cold extrusion operations towards forming teeth pattern on the circumferential surfaces of its two gear sections at their outer diameters, wherein such forging and extrusion operations are performed along with supporting optional operations towards conditioning of the work-piece and achieving finished structure. The proposed method discussed herein below is characterized in following steps:
a) formation of gear blank and its basic structure of two gear sections in forging operation,
b) formation of teeth pattern on the circumferential surface of the small gear section, on its outer diameter therein, by first stage cold extrusion at cold extrusion press,
c) formation of teeth pattern on the circumferential surface of the bigger gear section, on its outer diameter therein, by second stage cold extrusion at cold extrusion press, and
d) elimination of the requirement of machining for teeth creation, such as teeth cutting or shaping on the circumferential surfaces of the smaller and bigger gear sections, at their outer diameters.

For such forging not only a particular range of temperature is important, but several other factors require especial strategic planning, namely: (i) proper conditioning of the ingot to support effective hot or warm or cold forging, (ii) a very effective selection/designing of dies for forging of the desired article and achieving the final product or almost final product; (iii) customized, state of the art technology involvement towards die making; (iv) adopting the forging conditions according to the material of the ingot undergoing forging etc.

Piece of billet, concerning the present invention, usually of steel or alloy material, plays important role towards selecting an optimized forging conditions and thereafter performing other supportive operations, depending upon the structural features of the final product, structural strength, functional features of the product etc.

One schematic scheme for performing all essential and optional operations towards manufacturing gear by proposed method herein is shown in following table hereinbelow:

| No. of Step | Particular of the step performed during complete manufacturing process |
|---|---|
| 1 | Raw Material Receipt |
| 2 | Receiving Inspection of R.M. by QA |
| 3 | Forging Blank(Cold/Hot-Amp30S) |
| 4 | Annealing |
| 5 | Shot Blasting |
| 6 | Phosphating |
| 7 | Cold Extrusion at KP 250 Knuckle Joint Press (Small Gear section) |
| 8 | Phosphating |
| 9 | Cold Extrusion at KP 250 Knuckle Joint Press (on OD of bigger Gear section) |
| 10 | CNC |
| 11 | Case Carburising |
| 12 | Shot Blasting (Hanger Type) |
| 13 | Honning/ Hard Part Boring |
| 14 | Gear rolling |
| 15 | Final Inspection (Sampling PDI) |

Main features of the proposed method are:
   i. Formation of the gear blank by forging operation, optionally using either the hot forging route or warm/cold forging route; wherein the gear blank achieves the basic structural features, namely the smaller gear section, the bigger gear section and the central hole position;
   ii. Performing cold extrusion of the forged work piece of the gear blank in two steps: (a) first stage cold extrusion is performed on the outer circumference of the smaller gear section to create the teeth pattern there, and (b) second stage cold extrusion is performed on the outer circumference of the bigger gear section to create the teeth pattern there;
   iii. Completely obviating the convention application of teeth shaping and teeth hobbing operations in creation of any teeth on the smaller gear section or on bigger gear section of the proposed gear with double teeth pattern; wherein said double patterns of the teeth on smaller and bigger gear sections are achieved by two stage cold extrusion.

Above discussed and other features and advantages of the present invention will be appreciated and understood by those skilled in the art from the following detailed description and drawings.
**Figure 1** illustrates the schematic plan of the proposed process of manufacturing the gear with double teeth patterns in various stages from A to D.
**Figure 2****:** It represents one schematic view of the most preferred embodiment of the gear with double teeth patterns showing the teeth profiles on the outer circumferences of its small gear section as well as on that of bigger gear section.
**Figure 3****:** It represents the schematic plan of the proposed method herein indicating the steps eliminated from the instant method, namely the hobbing and shaping operations.

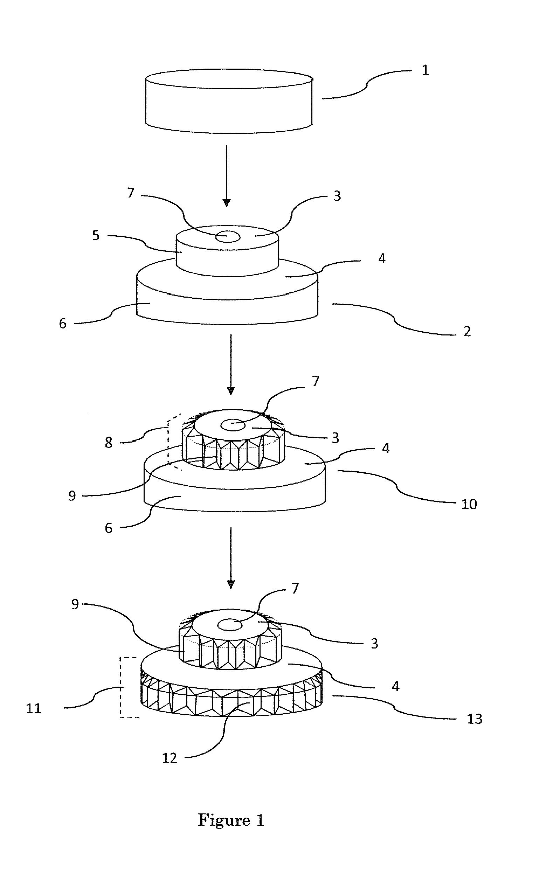

During the forging blank operation on the piece of raw material/billet (1), a gear blank work-piece (2) is created with two gear sections, (3) and (4), is formed (figure 1), wherein both the blank gear sections comprise their circumferential surfaces (5) and (6) respectively at their outer diameters. Said two gear sections (3) and (4) are created around same central hole (7) and central axis therein, wherein the diameter of upper gear section (3) is smaller in comparison to that of lower gear section (4). On said gear blank work-piece (2), depending upon the nature of said forging operation, that is cold or warm or hot, suitable heat treatment is performed so that the forged work-piece (2) gets conditioned to undergo further operations, namely shot blasting; phosphating and cold extrusion (stage one) at cold extrusion press, mainly towards creating teeth pattern (8) on the circumferential surface (5) of the small gear section (3) on its outer diameter. In figure 1 the work-piece (10) shows one small gear section (3) duly extruded with the teeth pattern (8) while the bigger gear section (4) remains blank. Such cold extrusion on small gear section (3) eliminates requirement of further machining therein such as teeth cutting or shaping. Said one step cold extrusion operation on small gear section (3) forms the teeth pattern (8), wherein each individual tooth (9) is created with its all structural features and pre-determined structural profiles therein.

Again, the gear work-piece (10), received with first stage cold extrusion on its small gear section (3) is subjected to second round of phosphating and thereafter second round of cold extrusion is performed on the circumferential surface (6) of the bigger gear section (4), on its outer diameter, to form the teeth pattern (11) therein. Such cold extrusion on bigger gear section (4) eliminates requirement of further machining therein such as teeth cutting or hobbing. Said one step cold extrusion operation on bigger gear section (4) forms the teeth pattern (11), wherein each individual tooth (12) is created with its all structural features and pre-determined structural profiles therein. Complete gear with double teeth pattern (13) is then further subjected to continuous step-wise finishing operations, mainly involving CNC machining, case carburizing, shot blasting (Hanger type) and honing/hard part boring.

Two patterns of teeth, (8) and (11), created on two gear sections, (3) and (4) of the proposed gear with double teeth patterns (13) herein may be different from each other, mainly in terms of tooth size, dimension and tooth profile and number of teeth in one pattern therein; wherein such differences are selected and pre-determined involving the teeth-gear related principles, structural features and functional provisions defined therein.

Said two patterns of teeth (8) and (11), created on two gear sections (3) and (4) of the proposed gear with double teeth patterns (13) herein, may be created as the spur gears (that is as straight cut gears) or bevel gears, wherein the bevel gear is shaped like a right circular cone with most of its tip cut off.

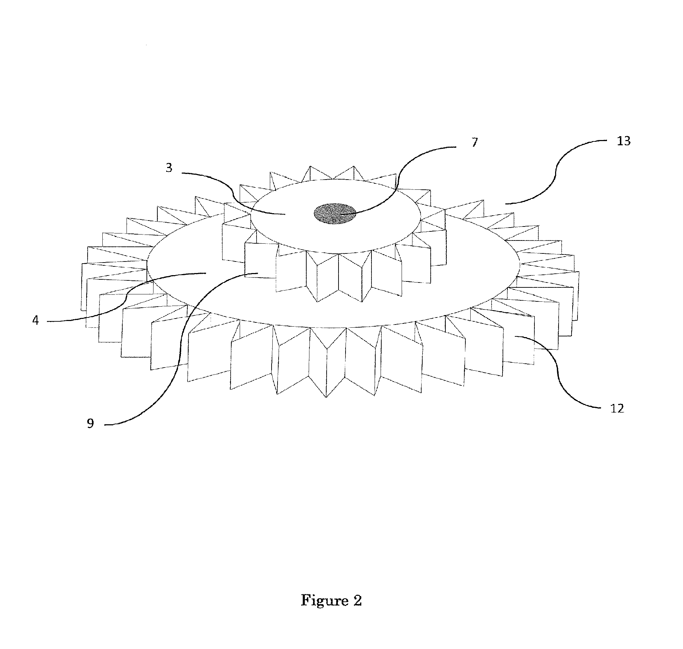

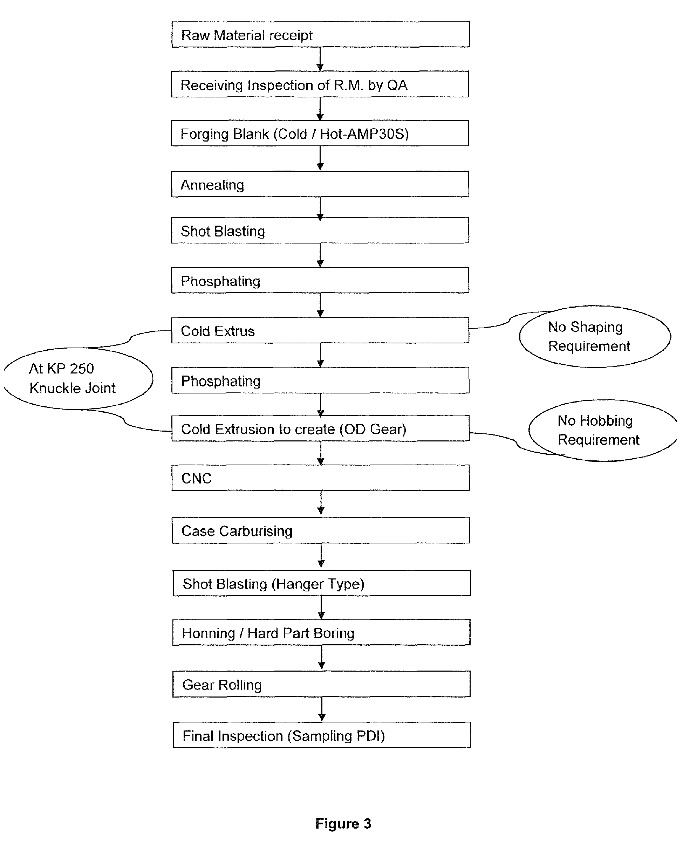

Figure 2 shows the final gear with double teeth patterns product (13), with all its structural features, as described using figure 1. Figure 3 specifies all the steps and processes involved in the complete manufacturing method for making the proposed gear with double teeth patterns; wherein it highlights all the essential steps and secondary steps, being performed in continuous step-wise manner. First stage cold extrusion on the small gear section (3) particularly eliminates any possibility of performing shaping operation for forming of teeth pattern (8) therein. Again second stage cold extrusion on the bigger gear section (4) particularly eliminates any possibility of performing hobbing operation for forming of teeth pattern (11) therein.

### Scope of the invention:

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A Method of manufacturing gear with double teeth patterns by involves forging operation towards gear blank formation, followed by two stage cold extrusion operations towards forming teeth pattern on the circumferential surfaces of its two gear sections at their outer diameters, wherein such forging and extrusion operations are performed along with supporting optional operations towards conditioning of the work-piece and achieving finished structure;
wherein said method is **characterized in**:
a) teeth pattern on the circumferential surface of the small gear section, on its outer diameter therein, is formed by first stage cold extrusion at cold extrusion press,
b) teeth pattern on the circumferential surface of the bigger gear section, on its outer diameter therein, is formed by second stage cold extrusion at cold extrusion press, and
c) elimination of the requirement of machining for teeth creation, such as for teeth cutting or shaping on the circumferential surfaces of the smaller and bigger gear sections, at their outer diameters.

2. A Method of manufacturing gear with double teeth patterns, as claimed in claim 1, wherein it involves hot or warm or cold forging of the initial billet piece towards creating the gear blank, which is created with two blank gear sections around the same central hole and central axis therein, wherein the diameter of one gear section is smaller in comparison to that of another gear section therein.

3. A Method of manufacturing gear with double teeth patterns, as claimed in claim 1, wherein teeth patterns on smaller and bigger gear sections are formed in two separate cold extrusion operations, performed in two steps and wherein said teeth patterns are optionally be same or different with respect to each other, mainly in terms of tooth size, dimension and tooth profile and number of teeth in each pattern therein.

4. A Method of manufacturing gear with double teeth patterns, as claimed in claim 1, wherein the forged work-piece gets conditioned to undergo further operations, namely shot blasting; phosphating and then it undergoes cold extrusion (stage one) at cold extrusion press, mainly towards creating teeth pattern on the circumferential surface of the small gear section on its outer diameter therein.

5. A Method of manufacturing gear with double teeth patterns, as claimed in claim 1, wherein the gear work-piece received with first stage cold extrusion on its small gear section is further subjected to second round of phosphating and thereafter it undergoes second round of cold extrusion towards creating teeth pattern on the circumferential surface of the bigger gear section, on its outer diameter therein.

6. A method of manufacturing gear with double teeth patterns involving forging and two stage cold extrusion process, as claimed in claim 1, wherein it is **characterized by** obviating the application of machining operations like teeth shaping and hobbing towards creation of the proposed gear with double teeth patterns and in a very unusual and innovative manner achieving both the teeth patterns on the outer circumferences of small gear section and bigger gear section therein by stepwise cold extrusion operations.

7. A Method of manufacturing gear with double teeth patterns, as claimed in claim 1, wherein after completion of second stage cold extrusion the complete gear with double teeth patterns is subjected to continuous step-wise finishing operations, mainly involving CNC machining, case carburizing, shot blasting (Hanger type) and honing/hard part boring.

8. A Method of manufacturing gear with double teeth patterns, as claimed in claim 1, wherein said first stage cold extrusion on smaller gear section involves a closed die for the purpose in the cold extrusion press and again the second stage cold extrusion on bigger gear section involves a closed die for the purpose in the cold extrusion press; wherein such dies are made in variable optional range of shape, size, dimension, surface pattern and configuration for the said purpose.

9. A Method of manufacturing gear with double teeth patterns, as claimed in claim 1, wherein said two patterns of teeth, created on two gear sections of said gear with double teeth patterns herein are created as that of the spur gears (or straight cut gears) or bevel gears, wherein the bevel gear is shaped like a right circular cone with most of its tip cut off.
